**Europäisches Patentamt**

**European Patent Office**

**Office européen des brevets**

(11) Veröffentlichungsnummer: **0 231 486**
**B1**

(12) **EUROPÄISCHE PATENTSCHRIFT**

(51) Int. Cl.⁴: **B60S 3/06**

(45) Veröffentlichungstag der Patentschrift:
**26.04.89**

(21) Anmeldenummer: **86117127.0**

(22) Anmeldetag: **10.12.86**

(54) Verfahren und Vorrichtung zum Waschen von Fahrzeugen in einer Waschstrasse.

(30) Priorität: **14.12.85 DE 3544390**

(43) Veröffentlichungstag der Anmeldung:
**12.08.87 Patentblatt 87/33**

(45) Bekanntmachung des Hinweises auf die Patenterteilung:
**26.04.89 Patentblatt 89/17**

(84) Benannte Vertragsstaaten:
**DE ES FR SE**

(56) Entgegenhaltungen:
**DE-A- 1 954 259**
**DE-A- 2 056 685**
**DE-A- 3 208 527**
**FR-A- 2 409 889**

(73) Patentinhaber: **Kleindienst GmbH, Argonstrasse 8,**
**D-8900 Augsburg(DE)**

(72) Erfinder: **Donner, Sigmar, Am Hopfengarten 38,**
**D-8904 Friedberg(DE)**

(74) Vertreter: **Ernicke, Hans-Dieter, Dipl.-Ing. et al,**
**Schwibbogenplatz 2b, D-8900 Augsburg(DE)**

## Beschreibung

Die Erfindung betrifft ein Verfahren und eine Vorrichtung zum Waschen von Fahrzeugen in einer Waschstraße entsprechend den Oberbegriffen der Verfahrens- und Vorrichtungs-Hauptansprüche.

In Waschstraßen, in denen die Fahrzeuge in einer Reihe durch stationäre Waschstationen geschleppt werden, besteht das Problem, daß durch die Ortsgebundenheit der Waschstationen für die Reinigung der steilen Front- und Heckflächen des Fahrzeugs vergleichsweise wenig Zeit zur Verfügung steht. Auf der anderen Seite weisen diese Flächen aber häufig gerade die größte Verschmutzung auf.

Zur Lösung dieses Problems ist es aus der DE-A 1 755 648, der DE-A 1 954 259 und der US-A 3 908 219 bekannt, die Waschbürste an diesen Frontflächen unter Herabsetzung der Relativgeschwindigkeit zwischen Bürste und geschlepptem Fahrzeug ein Stück mitzubewegen. Dies geschieht, indem die Halterung der Waschbürsten, üblicherweise ein Portal, mit der Schleppgeschwindigkeit des Fahrzeuges zum Waschen der Front- und Heckflächen in Schleppprichtung mitbewegt und zum Waschen der Seitenflächen bzw. Längsflächen entgegen der Schleppprichtung geführt wird.

Die Waschstation nach der US-A 3 908 219 arbeitet nur mit vertikalen Waschbürsten, die für sich allein keine zufriedenstellende Reinigung der Front- und Heckflächen bieten. Für horizontale Waschbürsten ist dieser Stand der Technik nicht geeignet.

Bei der DE-A 1 755 648 erfolgt die Steuerung des Portales über mechanische Oberflächentaster oder über eine fest vorgegebene, einer mittleren, angenommenen Proportion der üblichen Fahrzeuge entsprechende Steuerkurve. Die mechanischen Taster haben den Nachteil, daß sie häufig zu Fahrzeugbeschädigungen führen, während die vorgegebene Steuerkurve der heutzutage herrschenden Vielfalt an Karosserieformen- und größen nicht gerecht wird. Die Folge davon sind unzureichende Waschergebnisse. Außerdem kann die bekannte Waschstraße nicht an sich ändernde Durchsatzzahlen von Fahrzeugen angepaßt werden und ist damit unwirtschaftlich.

Die DE-A 1 954 259, von der die Erfindung als nächstliegendem Stand der Technik ausgeht, lehrt eine Mitbewegung des Portales beim Waschen der Front- und Heckflächen des Fahrzeuges. Die Portalbewegung wird über das Drehmoment der Waschbürsten gesteuert, erfolgt dabei aber stets mit konstanter, annähernd der Schleppgeschwindigkeit entsprechender Geschwindigkeit. Auch bei diesem Stand der Technik zeigen sich, vor allem im Heckbereich, unzureichende Waschergebnisse. Diese bekannte Waschstraße ist mangels Anpaßbarkeit an unterschiedliche Durchsetzungsgrade ebenfalls nicht wirtschaftlich.

Es ist daher Aufgabe der vorliegenden Erfindung, eine Möglichkeit zur Erhöhung des Reinigungseffektes zusammen mit einer Verbesserung der Wirtschaftlichkeit aufzuzeigen.

Die Erfindung löst diese Aufgabe mit dem Kennzeichen des Verfahrens- und Vorrichtungs-Hauptanspruches. Die Erhöhung der Wirtschaftlichkeit erfolgt durch eine Anpassung der Schleppgeschwindigkeit an die vorhandenen Durchsatzzahlen an Fahrzeugen. In Stoßzeiten läuft die Schleppeinrichtung schneller als zu weniger verkehrsreichen Zeiten. Die Portalgeschwindigkeit wird dabei entsprechend nachgeregelt, was aber in einer eigenständigen Steuerung erfolgt. Dieser Umstand ermöglicht das beschleunigte Nachführen der Waschbürste am Fahrzeugheck, wodurch die Waschqualität wesentlich gesteigert wird.

Nach dem Überfahren der Heckkante des Fahrzeugs entfernt sich die Waschbürste, bedingt durch die Trägheit der Steuerung, ein Stück von der steilen Heckfläche des Fahrzeugs. Dadurch wird die Reibkraft der Bürste vermindert und das Waschergebnis verschlechtert. Bei konstanter, der Schleppgeschwindigkeit entsprechender Portalgeschwindigkeit, bleibt dieser Abstand erhalten. Auch eine erhöhte, aber konstante Portalgeschwindigkeit ist ungünstig, da sich bei Variation der Schleppgeschwindigkeit unter gleichbleibendem Verhältnis zur Portalgeschwindigkeit unterschiedliche Waschergebnisse einstellen.

Zur Vermeidung dieser Nachteile wird erfindungsgemäß das Portal beschleunigt nachgeführt und erst nach Erreichen des Fahrzeughecks auf annähernd die Schleppgeschwindigkeit gebremst und weitergeführt. Die Führungsgeschwindigkeit kann dabei geringer als die Schleppgeschwindigkeit sein, so daß die Bürste sich wieder langsam vom Fahrzeugheck entfernt. Dies kann von Vorteil sein, um die mit Beschleunigung aufgelaufene Waschbürste von einer eventuell vorhandenen Fahrzeugkupplung ohne Beschädigung wieder abzuziehen.

Es empfiehlt sich, die gesamten Portalbewegungen über das Drehmoment bzw. die Drehzahl zu steuern. Dabei kann zur Erhöhung des Wascheffektes die Bürste über eine längere Zeit beschleunigt auf das Fahrzeugheck auflaufen, wodurch das Bürstenreibmoment und die Waschkraft ansteigen. Erst bei Erreichen eines vorher eingestellten Drehmomentes wird die Beschleunigungsphase beendet. In Variation dazu kann die Beschleunigungsphase auch nach einer vorgewählten Zeit oder einem vorgewählten Weg abgeschaltet werden. Durch die erfindungsgemäße freie Wahl des Verhältnisses von Schlepp- und Portalgeschwindigkeit können nach der Beschleunigungsphase das erreichte Reibmoment und damit die Waschkraft beibehalten oder wieder verringert werden. Im Interesse einer guten Reinigung der meistens besonders stark verschmutzten Heckpartien eines Fahrzeuges empfiehlt sich als Abschaltgrenzwert die Einstellung eines relativ hohen Bürstenreibmomentes, das vorzugsweise höher als das Reibmoment an den Längsflächen des Fahrzeugs ist.

Nachdem sich die gewünschten Reibmomente entlang des Fahrzeugs immer wieder ändern und weil auch die Gesamteinstellung variabel sein soll, empfiehlt es sich, das Bürstendrehmoment zu messen, was beispielsweise über eine Analogwertbildung durch Abgriff der Motordrehzahl des Bürstenantriebes geschehen kann. Diese Meßwerte werden dann in die Portalsteuerung und auch in die Steuerung für die Höhen- und Seitenbewegungen der Waschbürsten eingespeist und dort verarbeitet.

Mit der beschleunigten Nachführung der Waschbürste an das Fahrzeugheck ergibt sich ein neues Problem, das dem Grunde nach allerdings auch bei bekannten Anlagen nach dem Stand der Technik besteht. Eine Portalsteuerung, die allein auf Drehmomentsänderungen der Waschbürsten basiert, funktioniert nur für vertikale Bürsten einwandfrei und führt für horizontale Bürsten zu weniger zufriedenstellenden Ergebnissen. Ein Übergang der Stirnflächen in die Seitenflächen des Fahrzeugs erfolgt meist in einem Winkel von ca. 90°, der über eine Momenten- oder Drehzahlmessung deutlich feststellbar ist. Die Übergänge zwischen den horizontalen Fahrzeugkanten an Motorhaube, Scheiben, Dach und Kofferraum sind manchmal weniger stark ausgeprägt und lassen sich für eine Drehmomentensteuerung mit der erforderlichen Schaltgenauigkeit nicht ohne weiteres heranziehen. Außerdem hat die Zahl der Karosseriegrundformen seit dem Anmeldetag des in der Beschreibungseinleitung genannten Standes der Technik erheblich zugenommen. Es gibt neben den weitverbreiteten Stufenheckversionen inzwischen eine hohe Zahl von Steilheckfahrzeugen in Form von Kombis oder Kompaktwagen und außerdem viele Schräg- bzw. Fließheckfahrzeuge. Steil- und Schrägheckfahrzeuge verschmutzen im Bereich ihrer Heckfenster sehr stark und benötigen dort eine intensive Reinigung, die bei Stufenheckfahrzeugen nicht notwendig ist.

Für die Hauptaufgabe entsteht damit der Zusatzaspekt der Erzielung eines gleichbleibend guten Waschergebnisses für die unterschiedlichsten Karosserieformen.

Die Erfindung löst diese Aufgabe, indem die Portalbewegungen, insbesondere die Beschleunigungsphase beim Nachführen der Waschbürste, in Abhängigkeit von den unterschiedlichen Karosserieformen zu verschiedenen Zeitpunkten eingeleitet werden. Die Portalsteuerung erfolgt dabei im wesentlichen über die Messung der Drehmomentenabfälle an den Fahrzeugkanten, die mögliche Schaltpunkte für die Einleitung der Portalbewegung definieren. Zur Unterscheidung der relevanten, horizontalen Fahrzeugkanten, ab denen die Portalbewegung eingeleitet werden soll, wird das Drehmomentensignal mit einem Konturenkennsignal verglichen. Bei Steilheck- und Schrägheckfahrzeugen mit stark verschmutztem Rückfensterbereich wird als relevante Heckkante die Dachkante herangezogen. Bei Stufenheckfahrzeugen ist dies die Kofferraumkante.

Die meßtechnische Konturenerkennung läßt sich erfindungsgemäß auf unterschiedliche Weise durchführen. Die Unterscheidung der verschiedenen Karosseriegrundformen läßt sich durch Erfassung der gesamten Heckkontur und Vergleich mit normierten Grundformen, durch eine Abstandsmessung von Dachkante und Fahrzeugende oder durch Erfassung der Fahrzeughöhe kurz hinter der Hinterachse treffen. Desgleichen kann eine Konturenerkennung auch durch Definition vorgenommen werden, indem als relevante Heckkante die erste, durch Drehmomentenabfall festgestellte Fahrzeugkante angesehen wird, die sich nach Eintritt des Fahrzeugendes in einen definierten Meßbereich einstellt.

Die Konturenerkennung wird vorzugsweise mit berührungsfreien Meßvorrichtungen, wie Lichtschranken oder anderen Kantentastern vorgenommen. Diese Meßvorrichtungen können direkt am Portal der Waschstation oder mit großem Abstand davor am Eingang der Waschstraße angeordnet sein. Die eingangsseitige Anordnung hat dabei den Vorteil, daß das Konturenkennsignal für mehrere Waschstationen oder mehrere Portale innerhalb einer Waschstation verwendet werden kann. Das Konturenkennsignal wird dann mit einem Positionssignal gekoppelt, damit die Portalsteuerung feststellen kann, ob die relevante Fahrzeugkante sich bereits im Steuerbereich befindet.

Die Erfindung ist in den Zeichnungen beispielsweise und schematisch dargestellt. Im einzelnen zeigen

Fig. (1) eine Waschstation in Seitenansicht mit einem Stufenheckfahrzeug,

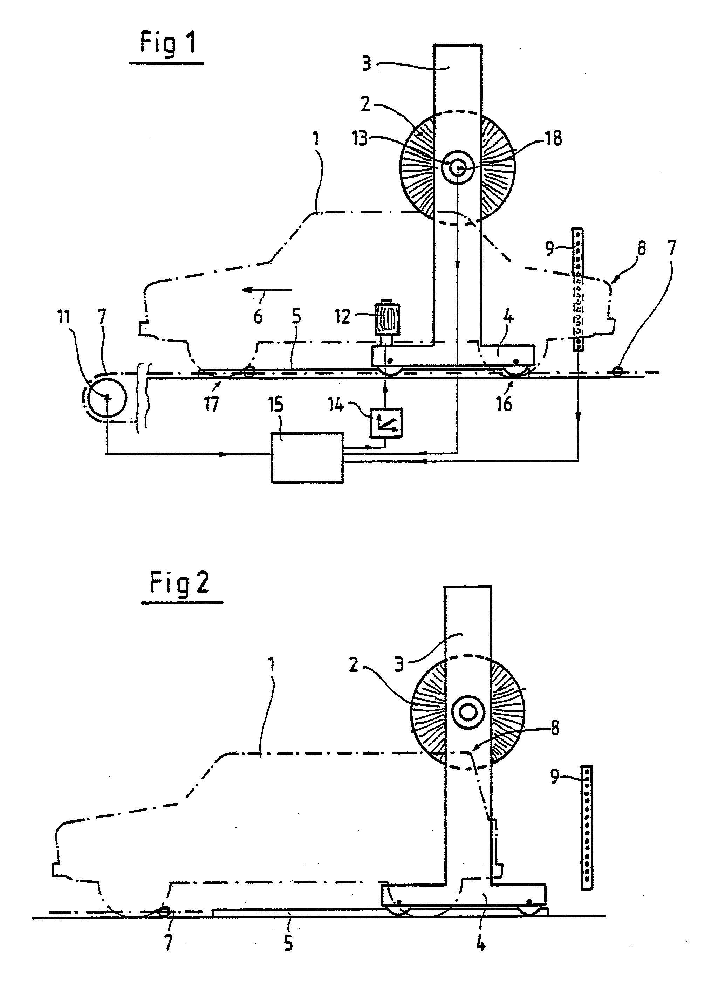

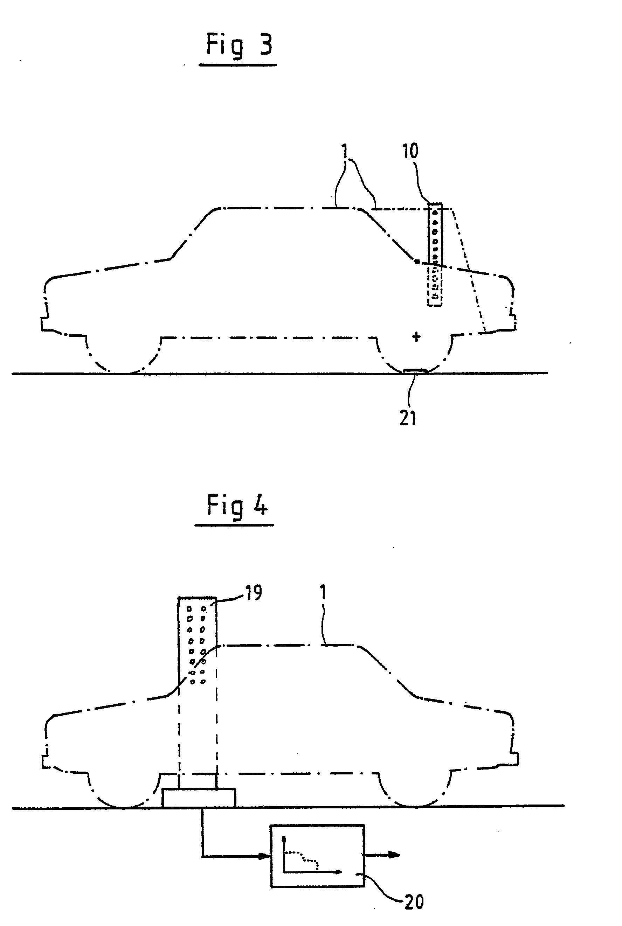

Fig. (2) eine Waschstation gemäß Fig. 1 mit einem Steilheckfahrzeug und

Fig. (3) und (4) Vorrichtungen zur Konturenerkennung.

Fig. (1) und (2) zeigen in Seitenansicht eine Waschstation in einer Waschstraße, durch die Fahrzeuge (1) mittels einer Schleppeinrichtung, hier einer Schleppkette (7), von Station zu Station geführt werden. Die gezeigte Waschstation weist ein U-förmiges, die Schleppstrecke überspannendes Portal (3) auf, das über ein Fahrgestell (4) über Schienen (5) in Schlepprichtung (6) um eine begrenzte Strecke vor- und rückwärts verfahrbar ist. Im Portal (3) ist eine horizontale Waschbürste (2) in der Vertikalen beweglich gelagert und wird über einen Stellantrieb auf- und abbewegt. Mittels eines Bürstenantriebes (13) wird die Waschbürste (2) in Rotation versetzt.

Variationen zu den gezeigten Ausführungsbeispielen sind in vielerlei Hinsicht möglich. Die Waschstation kann z.B. mehr als ein Portal (3) umfassen, wobei in jedem Portal eine horizontale Waschbürste geführt ist. In der gleichen oder auch in einer nachfolgenden Waschstation können auch Portale mit vertikalen Waschbürsten vorgesehen sein.

Für die Portalbewegungen ist eine Portalsteuerung (15) vorgesehen, in der auch die Steuerung für die Bürstenbewegungen integriert sein kann. In die Portalsteuerung (15) werden als äußere Meßwerte die Schleppgeschwindigkeit, das Bürstendrehmoment bzw. die Bürstendrehzahl und ein Konturenkennsignal bzw. ein Positionssignal eingegeben.

Die Schleppgeschwindigkeit wird über einen Drehzahlgeber (11) im Antrieb der Schleppeinrichtung abgegriffen. Das Bürstendrehmoment wird als umgekehrter Analogwert aus der Bürstendrehzahl ermittelt, die über einen Drehzahlgeber (18) am Bürstenantrieb (13) abgenommen wird. Schleppgeschwindigkeit und Bürstendrehzahl bzw. Bürstendrehmoment können auch auf andere, an sich bekannte Weise, ermittelt werden.

Das Portal wird über einen Drehstrommotor (12) angetrieben, der von der Portalsteuerung (15) über einen Frequenzumformer (14) mit einer Rampenschaltung angesteuert wird. Über den Frequenzumformer (14) können verschiedene Portalgeschwindigkeiten realisiert werden, wobei die Rampenschaltung die Einstellung beliebiger Beschleunigungskurven erlaubt.

Die Steuerung der Höhenbewegungen der Waschbürste (2) und der Portalbewegungen erfolgt primär über das Bürstendrehmoment bzw. seine Drehzahl. Beim Überfahren von Fahrzeugkanten, nach denen die Fahrzeugkontur abfällt, entfernt sich die Waschbürste (2) von der Karosserie, wodurch das Bürstendrehmoment abfällt und die Drehzahl ansteigt. Umgekehrt steigt beim Überfahren von Fahrzeugkanten mit anschließend steigender Fahrzeugkontur das Bürstendrehmoment bzw. die Drehzahl fällt. Die Drehzahländerungen werden an die Portalsteuerung (15) gemeldet und als Steuersignal ausgewertet. Die Waschbürste (2) wird dann wieder auf die Karosserie zurückgeführt.

Der Waschvorgang läuft mit der gezeigten Ausführungsform mit horizontaler Waschbürste (2) wie folgt ab:

Bei Ankunft eines Fahrzeuges befindet sich das Portal (3) in seiner Ausgangsstellung in der entgegen der Schlepprichtung (6) rückwärtigen Endposition (16) am Ende der Schiene (5). Die Waschbürste (2) befindet sich in unterer Stellung und wird auf ein Steuersignal bei Ankunft des Fahrzeuges eingeschaltet. Sobald die rotierende Waschbürste (2) in Eingriff mit der Fahrzeugfront kommt, steigt das Drehmoment bzw. es fällt die Drehzahl. Über dieses Signal wird der Portalantrieb eingeschaltet, und das Portal (3) bewegt sich mit dem geschleppten Fahrzeug (1) annähernd mit Schleppgeschwindigkeit. Die Bürste wird dabei in unterer Stellung verriegelt und wäscht verstärkt die Fahrzeugfront. Nach einem vorgewählten Weg, wobei vorzugsweise der gesamte Portalweg auf der Schiene (5) ausgeschöpft wird, wird die Bürste (2) freigegeben und klettert über die Fahrzeugfront auf die Motorhaube. In der vorderen Endposition (17) am Ende der Schiene (5) oder spätestens beim Überfahren der Fahrzeugvorderkante bleibt das Portal (3) stehen und fährt entgegen der Schlepprichtung (6) wieder zurück, sobald die Waschbürste (2) sicher auf der Motorhaube aufsitzt. Beim Erreichen der Windschutzscheibe, die durch Drehmomentenanstieg signalisiert wird, bleibt das Portal (3) wieder stehen, und die Bürste (2) klettert auf das Dach. Danach wird das Portal (3) in die rückwärtige Endposition (16) zurückgeführt.

Variationen ergeben sich hinsichtlich von Frontlenkerfahrzeugen, wie Lieferwagen oder dgl., deren Fahrzeugform durch ein Konturenkennsignal signalisiert wird. Bei Ankunft des Fahrzeuges beginnt die Waschbürste (2) bereits zu Beginn der Portalfahrt zu klettern und wird in dieser Bewegung notfalls beschleunigt, falls in der vorderen Endposition (17) des Portales (3) die vordere Dachkante noch nicht erreicht ist. Während der Dachwäsche wird das Portal (3) wieder in die rückwärtige Endposition (16) zurückbewegt.

Bei einem Portal (3) mit vertikalen Waschbürsten werden diese nach Ankunft des Fahrzeuges während der Portalfahrt aus ihrer Startstellung, in der sie einander überlappen, zu ihrer jeweiligen Seite nach außen bewegt. Nach Erreichen der vertikalen Fahrzeugvorderkante werden die Seitenflächen des Fahrzeugs gewaschen, wobei das Portal (3) wieder zurückfährt.

Zum Waschen des Fahrzeughecks wird das Portal (3) ebenfalls wieder in Schlepprichtung (6) mitgeführt. Die Ankunft des Fahrzeughecks wird durch den Drehmomentenabfall bzw. den Anstieg der Drehzahl nach Überfahren der relevanten Heckkante (8) festgestellt. Auf dieses Schaltsignal hin wird von der Portalsteuerung (15) der Drehstrommotor (12) eingeschaltet und fährt dabei über die Rampenschaltung des Frequenzumformers (14) mit einstellbarer Beschleunigung hoch. Das Portal (3) wird durch diese Beschleunigung wieder an das Fahrzeugheck herangeführt, wobei die Waschbürste (2) verstärkt an das Fahrzeugheck angepreßt wird und dieses besonders intensiv wäscht. Während der Beschleunigungsphase steigt das Bürstendrehmoment bzw. fällt die Drehzahl ab. Nach einem vorgegebenen Weg oder einer vorgegebenen Zeit, vorzugsweise aber nach Erreichen eines vorbestimmten Bürstendrehmomentes bzw. einer gewissen Drehzahl, wird von der Portalsteuerung (15) die Beschleunigungsphase abgebrochen und das Portal (3) nunmehr annähernd in Schleppgeschwindigkeit weiterbewegt. Ist die Portalgeschwindigkeit dann genauso hoch wie die Schleppgeschwindigkeit, bleibt die Waschbürste (2) in intensivem Kontakt mit dem Fahrzeugheck und der verstärkte Reinigungseffekt bleibt über den gesamten Portalweg erhalten. Die Portalgeschwindigkeit kann nach Abbruch der Beschleunigungsphase auch etwas geringer als die Schleppgeschwindigkeit sein, wodurch sich die Waschbürste (2) wieder langsam vom Fahrzeugheck entfernt. Der vorbeschriebene Vorgang findet in gleicher Art auch für vertikale Waschbürsten statt.

Unterschiedliche Karosserieformen bedingen unterschiedliche Zeitpunkte für den Beginn des beschleunigten Nachführens des Portales (3) an das Fahrzeugheck. Im Ausführungsbeispiel der Fig. (1) ist ein Stufenheckfahrzeug dargestellt, bei dem der steile Heckbereich unterhalb der Kofferraumkante beginnt. Für diese Fahrzeugkontur wird daher die hintere Kofferraumkante als relevante Heckkante (8) angesehen. Für ein Steilheck- oder Schrägheckfahrzeug (1) gemäß Fig. (2) beginnt der Heckbereich jedoch bereits an der Dachkante, so daß diese als relevante Heckkante (8) angesehen wird. Für die vertikalen Waschbürsten sind die über die Drehmomentensteuerung deutlich erfaßbaren, vertikalen Fahrzeughinterkanten ausschlaggebend.

Würde die Portalsteuerung (15) nur in Abhängigkeit vom Drehmomentabfall bzw. Drehzahlanstieg reagieren, würde bei einem Stufenheckfahrzeug die Portalnachführung bereits an der Dachkante beginnen mit der Folge, daß für den steilen Heckbereich nicht mehr genügend Portalweg zur Verfügung steht. Vor der Waschstation wird daher eine Konturenerkennung zur Unterscheidung der verschiedenen Karosserieformen durchgeführt. Anhand dessen kann die Portalsteuerung (15) unterscheiden, ob der festgestellte Drehmomentenabfall bzw. Drehzahlanstieg die relevante Heckkante (8) oder eine davorliegende Fahrzeugkante signalisiert. Dies ist vor allem für die horizontale Waschbürste (2) wichtig.

In Fig. (1) und (2) wird die Konturenerkennung über eine Lichtschranke (9) durchgeführt, die mit Abstand hinter der rückwärtigen Endposition (16) des Portales (3) angeordnet ist. Der Abstand zur Waschbürste (2) in dieser Stellung ist dabei größer als die übliche Hecklänge von Steil- oder Schrägheckfahrzeugen und kleiner als die übliche Heck- bzw. Kofferraumlänge von Stufenheckfahrzeugen. Dadurch wird ein Meßbereich zwischen der Waschbürste (2) bzw. der Portalmitte und dieser Lichtschranke (9) definiert. Sobald ein Fahrzeugende in diesen Meßbereich gelangt, was durch Freigabe der Lichtschranke (9) festgestellt wird, wird von der Portalsteuerung (15) der nächstfolgende Drehmomentenabfall bzw. Drehzahlanstieg als Signal für die relevante Heckkante (8) angesehen. Wie Fig. (1) zeigt, ist bei einem Stufenheckfahrzeug (1) die Lichtschranke (9) noch abgedeckt, wenn über die Waschbürste (2) die Dachkante festgestellt wird. Das Portal (3) bleibt dadurch vorerst noch stehen, und nur die Waschbürste (2) steigt über das Rückfenster und den Kofferraumdeckel abwärts. Bei Erreichen der Kofferraumkante ist die Lichtschranke (9) nicht mehr unterbrochen, so daß diese Kante als relevante Heckkante (8) erkannt wird, mit der Folge, daß das Portal (3) beschleunigt dem Heck nachgeführt wird und die Waschbürste (2) dabei weiter nach unten in ihre untere Endstellung absteigt.

In Fig. (2) ist bei Erreichen der Dachkante die Lichtschranke (9) bereits freigegeben, so daß diese Kante als relevante Heckkante (8) erkannt und das Portal (3) schon hier beschleunigt nachgeführt wird. Die horizontale Waschbürste (2) bewegt sich damit über den gesamten Portalweg abwärts.
Bei Kombis oder dgl. Fahrzeugen mit steil abfallendem Fahrzeugheck kann die Mitführgeschwindigkeit nach Abbruch der Beschleunigungsphase konstant gehalten werden. Bei Schrägheck- oder sogar Fließheckfahrzeugen, die erst einen mehr oder weniger schräg abfallenden Heckfensterbereich und anschließend eine steil abfallende Heckfläche aufweisen, empfiehlt es sich, die Mitführgeschwindigkeiten nach Abbruch der Beschleunigungsphase drehmomentenabhängig zu steuern. Nach Überfahren der Fahrzeugkante zwischen Rückfenster und Heckfläche kann eine erneute Beschleunigungsphase eingeleitet werden. Desgleichen kann auch die Portal- und Bürstensteuerung von vornherein so ausgelegt sein, daß beim Nachführen am Heck die horizontale Waschbürste (2) mit konstanter Geschwindigkeit absteigt, während die Portalgeschwindigkeit in Abhängigkeit von Drehmoment oder Drehzahl der Bürste geregelt wird. Damit kann über den gesamten Mitführweg ein konstanter Anpreßdruck der Bürste gegen das Fahrzeug realisiert werden.

Variationen zum gezeigten Ausführungsbeispiel der Fig. (1) und (2) sind dahingehend möglich, daß der Meßbereich in der Portalsteuerung intern als Weg definiert wird und daß der Eintritt des Fahrzeugendes in diesen Bereich über ein mitgeführtes Positionssignal gemeldet wird. Weitere Variationen zeigen die Fig. (3) und (4).

Außer durch die unterschiedliche Hecklänge lassen sich die verschiedenen Karosserieformen auch durch die Steilheit des Bereiches hinter der Dachkante voneinander trennen. Im Ausführungsbeispiel der Fig. (3) ist im Boden der Waschstraße eine Kompaktschiene (21) eingelassen und in Schlepprichtung (6) gesehen mit geringem Abstand dahinter eine vertikale, leistenförmige, über die gesamte Fahrzeughöhe reichende Lichtschranke (10) angeordnet. Diese wird bei Überfahren der Kontaktschiene (21) aktiviert und mißt die Fahrzeughöhe hinter der Kontaktschiene (21). Bei Stufenheckfahrzeugen liegt die Dachkante üblicherweise etwas vor oder ungefähr auf Höhe der Hinterradachse, die durch Überfahren der Kontaktschiene (21) festgestellt wird. Mit der Heckscheibe fällt die Fahrzeugkontur damit bereits ungefähr in Höhe der Hinterachse deutlich ab. Die Lichtschranke (10), die beispielsweise in einem Abstand von ca. 20 cm hinter der Kontaktschiene (21) angeordnet ist, mißt dadurch eine bereits deutlich abgefallene, ziemlich geringe Fahrzeughöhe. Bei Steil- oder Schrägheckfahrzeugen befindet sich die Dachkante hinter der Hinterradachse, so daß die Lichtschranke (10) eine deutlich größere Fahrzeughöhe registriert. Dies ist auch der Fall bei Fließheckfahrzeugen, bei denen die Dachkante zwar in Höhe oder vor der Hinterradachse liegt, bei denen der Heckfensterbereich aber flach abfällt.

Fig. (4) zeigt eine weitere Möglichkeit, bei der eine Konturenerfassung, wie sie dem Grunde nach aus der DE-OS 3 208 527 bekannt ist, zum Einsatz kommt. Die Fahrzeuge werden dabei an einer leistenförmigen, vertikalen Lichtschranke (19) vorbeigeführt, die taktweise die Fahrzeughöhe mißt und in einen Speicher (20) schreibt. Dabei braucht nur der auf den Dachbereich folgende, hintere Fahrzeugbereich gespeichert zu werden. Alternativ ist eine Konturenerfassung auch durch eine flächenförmige Matrix von mehreren Lichtschranken möglich, die die gesamte Kontur auf einmal messen. Die Auswertung und Unterscheidung der gespeicherten Konturen kann auf unterschiedliche Weise erfolgen. Zum einen ist es möglich, einen Flächenvergleich mit gespeicherten Karosseriegrundformen durchzuführen, zum anderen können auch die Hecklänge und/oder die Steilheit des Heckfensters errechnet und mit vorgegebenen Werten von Karosseriegrundformen verglichen werden.

Über die Konturenerkennung gemäß Fig. (3) und (4) wird der Portalsteuerung (15) dann mitgeteilt, ob der erste, an der Dachkante registrierte Drehmomentenabfall oder Drehzahlanstieg als Schaltsignal oder der zweite, an der Kofferraumkante registrierte Abfall oder Anstieg herangezogen werden soll.

Wie in Fig. (1) und (2) gezeigt, können die Vorrichtungen zur Konturenerkennung direkt vor der jeweiligen Waschstation angeordnet sein. Die Konturenerkennung kann aber auch am Eingang der Waschstraße vorgenommen werden, und das daraus gewonnene Konturenkennsignal zusammen mit einem Positionssignal für die fortschreitende Fahrzeugbewegung an die Portalsteuerung (15) gemeldet werden. Das einmal gewonnene Konturenkennsignal kann damit von mehreren Waschstationen ausgewertet werden. Das Positionssignal wird über ein Schieberegister, das mit einer Synchronisationsschaltung verbunden ist, an die einzelnen Waschstationen gemeldet. Die Synchronisationsschaltung ist dabei über einen Weggeber mit der Schleppgeschwindigkeit gekoppelt. Die Wegmessung kann beispielsweise auch durch Auswertung des vom Drehzahlmesser (11) gewonnenen Meßsignales erfolgen. Über das Positionssignal weiß die Portalsteuerung (15) jeder Waschstation, wann die eingangs erkannte Kontur in ihren Arbeitsbereich gelangt und welche der durch Änderung des Drehmoments oder der Drehzahl festgestellten Fahrzeugkanten als relevante Heckkante (8) anzusehen ist.

Die eingangsseitige Konturenerkennung und Weitermeldung, gekoppelt mit einem Positionssignal, ist für alle Formen einer Konturenerkennung anwendbar.

**Patentansprüche**

1. Verfahren zum Waschen von Fahrzeugen in einer Waschstraße, bei welchem die Fahrzeuge (1) von einer Schleppeinrichtung (7) durch mindestens ein parallel dazu verfahrbares Portal (3) mit einer oder mehreren beweglichen Waschbürsten (2) geführt werden, wobei das Portal (3) zumindest beim Waschen des Hecks (8) mit dem geschleppten Fahrzeug mitgeführt wird, dadurch gekennzeichnet, daß die Fahrzeuge (1) mit unterschiedlichen Schleppgeschwindigkeiten bewegt werden, wobei die Portalgeschwindigkeit mit der Schleppgeschwindigkeit in einer eigenständigen Regelung verändert wird, und daß das Portal (3) nach dem Überfahren der Fahrzeugheckkante (8) durch die Bürste(n) (2) dem Fahrzeug (1) mit Beschleunigung nachgeführt und nach Erreichen des Fahrzeughecks (8) mit annähernd der Schleppgeschwindigkeit weitergeführt wird.

2. Verfahren nach Anspruch 1, dadurch gekennzeichnet, daß das Portal (3) dem Fahrzeug (1) solange beschleunigt nachgeführt wird, bis ein vorgewähltes Reibmoment der Bürste(n) (2) am Fahrzeugheck (8) erreicht ist, das vorzugsweise höher als das Reibmoment an den Längsflächen des Fahrzeugs ist.

3. Verfahren zum Waschen von Fahrzeugen in einer Waschstraße, nach Anspruch 1, wobei die Mitführung des Portals (3) am Fahrzeugheck (8) in Abhängigkeit von Drehmomentenänderungen der Bürstenantriebe erfolgt, dadurch gekennzeichnet, daß die Portalbewegungen nach den verschiedenen Karosseriegrundformen der Fahrzeuge unterschiedlich gesteuert werden und daß dazu die Lage der jeweils relevanten Heckkante (8) festgestellt wird, indem die Drehmomentenabfälle an den Fahrzeugkanten registriert und mit einer berührungsfreien meßtechnischen Konturenerkennung (9, 10, 19) des Fahrzeugs verglichen werden.

4. Verfahren nach Anspruch 3, dadurch gekennzeichnet, daß vor dem Portal (3) die Fahrzeugkontur abgetastet, mit normierten Karosseriegrundformen verglichen und ein entsprechendes Konturenkennsignal an die Portalsteuerung (15) gemeldet wird.

5. Verfahren nach Anspruch 3, dadurch gekennzeichnet, daß für die Konturenerkennung (9) die Fahrzeughöhe in kurzem Abstand hinter der Fahrzeughinterachse gemessen wird.

6. Verfahren nach Anspruch 3, dadurch gekennzeichnet, daß für die Konturenerkennung (9) vor einem Bezugspunkt (16) ein Meßbereich festgelegt wird, dessen Länge größer als die übliche Hecklänge von Steil- oder Schrägheckfahrzeugen und kleiner als die übliche Länge von Stufenheckfahrzeugen ist, und daß der Eintritt des Fahrzeugendes in diesen Meßbereich festgestellt und an die Portalsteuerung (15) gemeldet wird.

7. Verfahren nach Anspruch 4, 5 oder 6, dadurch gekennzeichnet, daß die Konturenerkennung mit größerem Abstand vor dem Portal (3) durchgeführt wird und daß das Konturenkennsignal zusammen mit einem Positionssignal für die fortschreitende Fahrzeugstellung an die Portalsteuerung (15) gemeldet wird.

8. Vorrichtung zum Waschen von Fahrzeugen in einer Waschstraße zur Durchführung des Verfahrens nach Anspruch 1 oder 2, die eine Schleppeinrichtung (7) und ein parallel dazu verfahrbares Portal (3) mit einer oder mehreren beweglichen Waschbürsten umfaßt, dadurch gekennzeichnet, daß die Schleppeinrichtung (7) eine Meßvorrichtung (11) für die Schleppgeschwindigkeit und die Bürstenantriebe (13) eine Meßvorrichtung (18) für die Motordrehzahl aufweisen, und daß die Meßvorrichtungen (11, 18) regeltechnisch mit einer hochintegrierten Steuerung (15) der Portalantriebe verbunden sind.

9. Vorrichtung nach Anspruch 8, dadurch gekennzeichnet, daß die Portalantriebe mit Drehstrommotoren (12) ausgerüstet sind, die über einen Frequenzumformer (14) mit Rampensteuerung angefahren werden.

10. Vorrichtung zur Durchführung des Verfahrens nach Anspruch 3 und 4, dadurch gekennzeichnet, daß vor dem Portal (3) eine oder mehrere Lichtschranken (19) angeordnet sind, die mit einem Speicher (20) für normierte Karosseriegrundformen und einer Vergleichsschaltung verbunden sind.

11. Vorrichtung zur Durchführung des Verfahrens nach Anspruch 3 und 5, dadurch gekennzeichnet, daß vor dem Portal (3) eine Kontaktschiene (21) im Boden und mit kleinem Abstand dahinter an der Seite eine leistenförmige, vertikale Lichtschranke (10) angeordnet sind.

12. Vorrichtung zur Durchführung des Verfahrens nach Anspruch 3 und 6, dadurch gekennzeichnet, daß in Schlepprichtung (6) hinter der rückwärtigen Endposition des Portals (3) eine Lichtschranke (9) in einem Abstand angeordnet ist, der größer als die übliche Hecklänge von Steil- oder Schrägheckfahrzeugen und kleiner als die übliche Hecklänge von Stufenheckfahrzeugen ist.

13.) Vorrichtung nach Anspruch 7, 10, 11, 12, dadurch gekennzeichnet, daß die Vorrichtungen (9, 10) zur Konturenerkennung mit großem Abstand vor dem Portal (3), vorzugsweise am Eingang der Waschstraße, angeordnet und mit einem Schieberegister verbunden sind, das seinerseits über eine mit der Schleppgeschwindigkeit gekoppelte Synchronisationsschaltung mit der Portalsteuerung verbunden ist.

**Revendications**

1. Procédé pour laver des véhicules automobiles dans une piste de lavage, dans lequel un dispositif de remorquage (7) fait passer les véhicules automobiles (1) dans au moins un portique (3) qui peut être déplacé parallèlement à ceux-ci et qui est muni d'une ou de plusieurs brosses mobiles de lavage (2), le portique (3) étant, au moins pendant le lavage de la partie arrière (8), entraîné avec le véhicule remorqué, caractérisé en ce qu'il consiste à remorquer les véhicules (1) à des vitesses de remorquage différentes, en modifiant la vitesse du portique avec la vitesse de remorquage par une régulation autonome, et par la (les) brosse(s) (2) à faire en sorte que le portique (3), après passage de la brosse sur le bord de la partie arrière du véhicule automobile (8), suive, de manière accélérée, le véhicule automobile (1) et, après qu'il a atteint la partie arrière du véhicule automobile (8), poursuive son déplacement sensiblement à la vitesse de remorquage.

2. Procédé suivant la revendication 1, caractérisé en ce qu'il consiste à faire en sorte que le portique (3) suive de manière accélérée le véhicule automobile (1) jusqu'à l'obtention d'un couple de frottement prescrit de (des) brosse(s) (2) sur la partie arrière du véhicule automobile (8), qui, de préférence, est plus grand que le couple de frottement sur les faces longitudinales du véhicule automobile.

3. Procédé pour laver de véhicules automobiles dans une piste de lavage suivant la revendication 1, l'entraînement du portique (3) sur la partie arrière du véhicule automobile s'effectuant en fonction des variations du couple de rotation des dispositifs d'entraînement des brosses, caractérisé en ce qu'il consiste à commander différemment les déplacements du portique suivant les différences de forme fondamentale de la carrosserie des véhicules automobiles et, à cet effet, à déterminer la position des bords arrière (8) à prendre en considération, en enregistrant les diminutions du couple de rotation sur les bords du véhicule automobile et en les comparant à une reconnaissance de contour (9, 10, 19) du véhicule automobile, s'effectuant par une technique de mesure sans contact.

4. Procédé suivant la revendication 3, caractérisé en ce qu'il consiste à détecter le contour du véhicule automobile devant le portique (3), à le comparer à des formes fondamentales de carrosseries qui sont normalisées, et à envoyer un signal correspondant de reconnaissance de contour au dispositif de commande du portique (15).

5. Procédé suivant la revendication 3, caractérisé en ce qu'il consiste, pour la reconnaissance du contour (9), à mesurer la hauteur du véhicule à courte distance derrière l'essieu arrière.

6. Procédé suivant la revendication 3, caractérisé en ce qu'il consiste à déterminer, devant un point de référence (16), une zone de mesure dont la longueur est plus grande que la longueur habituelle de la partie arrière de véhicules automobiles à partie arrière abrupte ou inclinée et inférieure à la longueur habituelle de véhicules automobiles à partie arrière en gradin, et à constater la pénétration de l'extrémité du véhicule automobile dans cette zone de mesure, et à la signaler au dispositif de commande du portique (15).

7. Procédé suivant la revendication 4, 5 ou 6, caractérisé en ce qu'il consiste à effectuer la reconnaissance du contour à une assez grande distance en avant du portique (3), et à envoyer au dispositif de commande du portique (15) le signal de reconnaissance du contour en même temps qu'un signal de position indiquant la position du véhicule en progression.

8. Dispositif pour laver de véhicules dans une piste de lavage pour la mise en œuvre du procédé suivant la revendication 1 ou 2, qui comporte un dispositif de remorquage (7) et un portique (3) qui peut être déplacé parallèlement à ce dispositif et qui est muni d'une ou de plusieurs brosses mobiles de lavage, caractérisé en ce que le dispositif de remorquage (7) comporte un dispositif de mesure (11) de la vitesse de remorquage et le dispositif d'entraînement des brosses (13) comporte un dispositif de mesure (18) de la vitesse de rotation du moteur, et en ce que les dispositifs de mesure (11, 18) sont reliés du point de vue de la technique de régulation à un dispositif de commande (15) à grande intégration.

9. Dispositif suivant la revendication 8, caractérisé en ce que les dispositifs d'entraînement du portique sont munis de moteurs triphasés (12) qui démarrent avec une commande à rampe par l'intermédiaire d'un convertisseur de fréquence (14).

10. Dispositif pour la mise en œuvre du procédé suivant la revendication 3 ou 4, caractérisé en ce que devant le portique (3) sont disposés un ou plusieurs barrages photoélectriques (19) qui sont reliés à une mémoire (20) des formes fondamentales normalisées de carrosseries et à un circuit de comparaison.

11. Dispositif pour la mise en œuvre du procédé suivant la revendication 3 ou 5, caractérisé en ce que devant le portique (3) sont montés un rail de contact (21) au sol et, a faible distance derrière celui-ci et sur le côté, un barrage photoélectrique (10) vertical en forme de réglette.

12. Dispositif pour la mise en œuvre du procédé suivant la revendication 3 ou 6, caractérisé en ce qu'un barrage photoélectrique (9) est monté en aval dans le sens de remorquage (6) de la position d'extrémité arrière du portique (3), à une distance qui est supérieure à la longueur habituelle de la partie arrière de véhicules automobiles à partie arrière abrupte ou inclinée et inférieure à la longueur habituelle de la partie arrière de véhicules automobiles à partie arrière en gradin.

13. Dispositif suivant la revendication 7, 10, 11 ou 12, caractérisé en ce que les dispositifs (9, 10) de reconnaissance du contour sont disposés à une grande distance en avant du portique (3), de préférence à l'entrée de la chaîne de lavage, et sont reliés à un registre à décalage qui est relié, à son tour, au dispositif de commande du portique par un circuit de synchronisation couplé à la vitesse de remorquage.

**Claims**

1. Method for washing vehicles in a washing line, in which the vehicles (1) are guided by a towing device (7) through at least one gantry (3) able to travel parallel thereto with one or more movable washing brushes (2), whereby at least during washing of the rear (8), the gantry (3) is entrained with the towed vehicle, characterised in that the vehicles (1) are moved at different towing speeds, whereby the gantry speed is varied with the towing speed in an independent control and that after the brush(es) (2) has/have travelled over the rear edge (8) of the vehicle, the gantry (3) follows the vehicle (1), accelerating, and after reaching the rear (8) of the vehicle is guided further at approximately the towing speed.

2. Method according to Claim 1, characterised in that the gantry (3) follows the vehicle (1), accelerating, until a pre-selected friction moment of the brush(es) (2) on the rear (8) of the vehicle is achieved, which is preferably higher than the friction moment on the longitudinal surfaces of the vehicle.

3. Method for washing vehicles in a washing line according to Claim 1, whereby the entrainment of the gantry (3) with the rear (8) of the vehicle takes place depending on variations in the torque of the brush drives, characterised in that the movements of the gantry are controlled in a variable manner according to the different basic body shapes of the vehicles and that for this purpose the position of the respective relevant rear edge (8) is ascertained in that drops in the torque at the edges of the vehicle are recorded and compared with a non-contacting identification of the contours (9, 10, 19) of the vehicle by measuring techniques.

4. Method according to Claim 3, characterised in that in front of the gantry (3), the contour of the vehicle is scanned, compared with standard basic body shapes and a corresponding contour identification signal is sent to the gantry control arrangement (15).

5. Method according to Claim 3, characterised in that for the contour identification (9), the height of the vehicle is measured at a short distance behind the rear axle of the vehicle.

6. Method according to Claim 3, characterised in that for the contour identification (9), before a reference point (16), a measuring range is determined, whereof the length is greater than the normal rear length of steep or sloping back vehicles and less than the normal length of vehicles with a stepped back and that the arrival of the end of the vehicle in this measuring range is ascertained and the gantry control arrangement (15) is informed.

7. Method according to Claim 4, 5 or 6, characterised in that identification of the contour is carried out at a substantial distance in front of the gantry (3) and that the contour identification signal is sent together with a position signal for the advancing vehicle position to the gantry control arrangement (15).

8. Apparatus for washing vehicles in a washing line for carrying out the method according to Claim 1 or 2, which comprises a towing device (7) and a gantry (3) able to travel parallel thereto with one or more movable washing brushes, characterised in that the towing device (7) comprises a measuring device (11) for the towing speed and the brush drives (13) comprise a measuring device (18) for the motor speed and that the measuring devices (11, 18) are connected by automatic control technology to a highly integrated control system (15) of the gantry drives.

9. Apparatus according to Claim 8, characterised in that the gantry drives are equipped with three-phase motors (12), which are started up by way of a frequency transformer (14) with ramp control.

10. Apparatus for carrying out the method according to Claims 3 and 4, characterised in that located in front of the gantry (3) are one or more light barriers (19), which are connected to a memory (20) for standard basic body shapes and a comparison circuit.

11. Apparatus for carrying out the method according to Claims 3 and 5, characterised in that located in front of the gantry (3) is a contact rail (21) in the floor and at a short distance therebehind on the side is a strip-like vertical light barrier (10).

12. Apparatus for carrying out the method according to Claims 3 and 6, characterised in that a light barrier (9) is located in the towing direction (6) behind the rear end position of the gantry (3) at a distance which is greater than the normal rear length of steep or sloping-back vehicles and less than the normal rear length of vehicles having a stepped back.

13. Apparatus according to Claims 7, 10, 11, 12, characterised in that the apparatus (9, 10) for identifying the contours are located at a substantial distance in front of the gantry (3), preferably at the entrance to the washing line and are connected to a shift register, which is in turn connected to the gantry control arrangement by way of a synchronisation circuit coupled at the towing speed.

## Fig 1

## Fig 2

## Fig 3

## Fig 4